## Europäisches Patentamt
## European Patent Office
## Office européen des brevets

(19)

(11) Veröffentlichungsnummer: **0 077 407**

**A1**

(12) ## EUROPÄISCHE PATENTANMELDUNG

(21) Anmeldenummer: 81104446.0

(22) Anmeldetag: 20.10.81

(51) Int. Cl.³: **B 60 S 3/04**
**G 05 D 11/03**

(43) Veröffentlichungstag der Anmeldung:
27.04.83  Patentblatt  83/17

(84) Benannte Vertragsstaaten:
AT BE DE FR IT NL

(71) Anmelder: Schmidt, Josef
Uellendahler Strasse 162
D-5600 Wuppertal 1(DE)

(72) Erfinder: Schmidt, Josef
Uellendahler Strasse 162
D-5600 Wuppertal 1(DE)

(54) **Dosiereinrichtung für Wasch- und Konservierungsmittel.**

(57) In einem mindestens teilweise transparenten Behälter (7) ist ein zweiter Behälter (8) untergebracht. In einer durch den ersten Behälter (7) geführten Wasserleitung (6) ist ein Drosselventil (1) angeordnet. Vor und hinter diesem Drosselventil (1) ist je eine Verbindung mit Ventil (2, 3, 4, 5) zwischen der Wasserleitung (6) und den Behältern (7, 8) vorgesehen. Aus den Behältern (7, 8) können je nach Einstellung der Ventile (1,2,3,4,5) durch die Einfüllstutzen (9, 10) eingefüllte Waschmittel oder Konservierungsmittel dem durch die Wasserleitung (6) fließenden Wasser zugegeben werden.

./...

Croydon Printing Company Ltd.

osef Schmidt · Uellendahler Str. 162 · 5500 Wuppertal 1

An das

Europäische Patentamt

Erhardtstr. 27

8000 München 2

Uellendahler Str. 162
**5600 WUPPERTAL 1**
Telefon (0202) 751845

Datum  20.5.81

BEZEICHNUNG GEÄNDERT
siehe Titelseite

## Patentschrift

Bei dem von mir erfundenen Gerät "Schmidt-Wasch-Boy" handelt
es sich um folgende Erfindung:

Ein Kasten aus Polystirol wird gegossen und zusamengeschweißt.
Er hat die Gesamtmaße von Höhe 12 cm x Breite 2o cm x Tiefe 1o cm.

Die gesamte Polystirolmasse wird eine Stärke von 2 - 5 mm haben.

Die Vorderfront des Gehäuses zumindest wird aus einer durchsichtigen Polystirolmasse bestehen, damit eine Einsicht gewährt
ist.

Innerhalb des vorbeschriebenen Gehäuses ist ein zweites Gehäuse
in den Maaßen Höhe 6 cm x Breite 11 cm x Tiefe1o cm eingeschweißt.

Innerhalb der ersten beiden cm des Bodes des Gehäuses verläuft
ein Wasserdurchlauf mit einem Durchmesser von 1/2 Zoll. Hieran
ist am Eingang als auch am Ausgang je ein Wasserschlauch herkömmlicher Fabrikation anschließbar. Der Wasserdurchlauf selbst wird
in seiner Stärke von einem stufenlos regulierbarem Hauptventil
gesteuert.

*Josef Schmidt*

Josef Schmidt  ·  Uellendahler Str. 162  ·  5600 Wuppertal 1

Uellendahler Str. 162
**5600 WUPPERTAL 1**
Telefon (0202) 751845

Datum

## Blatt - 2 - zur Patentschrift von 20.5.81

Durch weitere jeweils Ein- und Auslaufventile kann beliebig
aus der äußeren Beinhaltung einmal Auto-Wasch-Schampoo oder
auch beliebiges anderes Schampoo, und aus der inneren Beinhaltung
Auto-Wachs in flüssiger Form als auch anderes Konservierungemittel
in flüssiger Form, mit dem durchlaufenden Wasserdurchlauf freigesetzt werden und in den normalen Wasserdurchlauf eingeführt
werden.

Damit ergibt sich für den Benutzer die Möglichkeit, mehrere Arbeitsgänge in einem einzigen durchzuführen.

Ein Umstellen der stufenlos regulierbaren Ventile ermöglicht
dem Benutzer einmal mit normalem Leitungswasser einen Waschgang durchzuführen, zum anderen in diesen Waschgang mit Reinigungsmitteln aller herkömmlicher Art einzugreifen und zum Dritten
eine Konservierung des zu reinigenden Objektes vorzunehmen.

Die beiden Behältnisse sind mit jeweils einem Einfüllstutzen
zur Auffüllung von den benötigten Mitteln versehen.

Eine Zeichnung liegt dieser Patentschrift als Anlage bei.

(Josef Schmidt)

P a t e n t a n s p r ü c h e :

1.) Das "Kasten im Kasten"-System ermöglicht dem Benutzer, mehrere Wasch- bzw. Reinigungsvorgänge mit einem Gerät und in einem Arbeitsgang durchzuführen.

Durch stufenloses Schließen des Hauptventils (Wasserdurchlaufventil) und entsprechenden Öffnens der Ventile des äußeren Kastens (2) und (5) wird dem durchlaufenden Wasser (6) flüssiges Reinigungsmittel (Schampoo z.B.), das durch den Einfüllstutzen (9) in den äußeren Kasten eingefüllt werden kann, in gewünschter und dosierbarer Menge beigefügt.

Nach Beendigung des Reinigungsvorganges kann nach Schließung der Ventile (2) und (5) und Öffnen der Ventile des inneren Kasten (3) und (4) das gereinigte Objekt (z.B. Auto) mit Konservierungsmittel flüssiger Art, das durch den Einfüllstutzen (10) in den inneren Kasten (8) eingefüllt wird, behandelt werden.

- Blatt 2 -

zum Schreiben an das EPA vom 29.6.81 betreffend
P a t e n t a n s p r ü c h e

Die aus farblosem und durchsichtigem Polystirol bestehende Vorderseite ermöglicht dem Benutzer jederzeit Einsicht und damit Kontrolle über die vorhandene
Menge der Wasch- bzw. Konservierungsmittel in dem
"Schmidt-Wasch-Boy".

2.) Zusammengefaßt darf gesagt werden, daß sich der
Patentanspruch auf das gesamte Gerät, insbesondere
aber auf das "Kasten im Kasten"-Prinzip und auf das
Anordnungssystem der Ventile erstreckt.

# EUROPÄISCHER RECHERCHENBERICHT

Europäisches
Patentamt

EP 81 10 4446.0

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - C - 976 264 (E. GANSLOSER) <br> * Seite 1, Zeilen 1 bis 16; Fig. 1a, 1b * | 1 |
| X | DE - B - 1 023 597 (J. DOPSLAFF) <br> * Spalte 1, Zeilen 1 bis 30; Fig. 1 * | 1 |
| X | FR - A - 1 037 376 (M. HAASE) <br> * Fig. 1, 2 * | 1 |
| X | CA - A - 854 926 (C. LACASSE) <br> * Fig. 1, 2 * | 1 |
| X | AU - B - 500 604 (SYLON INTERNATIONAL PTY.) <br> * Fig. 1, 2 * | 1 |
| A | US - A - 3 842 447 (G.W. USHER) <br> & DE - A - 2 219 458 | |
| A | US - A - 4 218 013 (C.A. DAVISON) <br> ---- | |

### KLASSIFIKATION DER ANMELDUNG (Int Cl.)

B 60 S 3/04
G 05 D 11/03

### RECHERCHIERTE SACHGEBIETE (Int Cl.)

B 05 B 7/00
B 60 S 3/00
E 03 C 1/00
F 16 K 19/00
G 05 D 11/00

### KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

| | Der vorliegende Recherchenbericht wurde für alle Patentansprüche erstellt. |
|---|---|

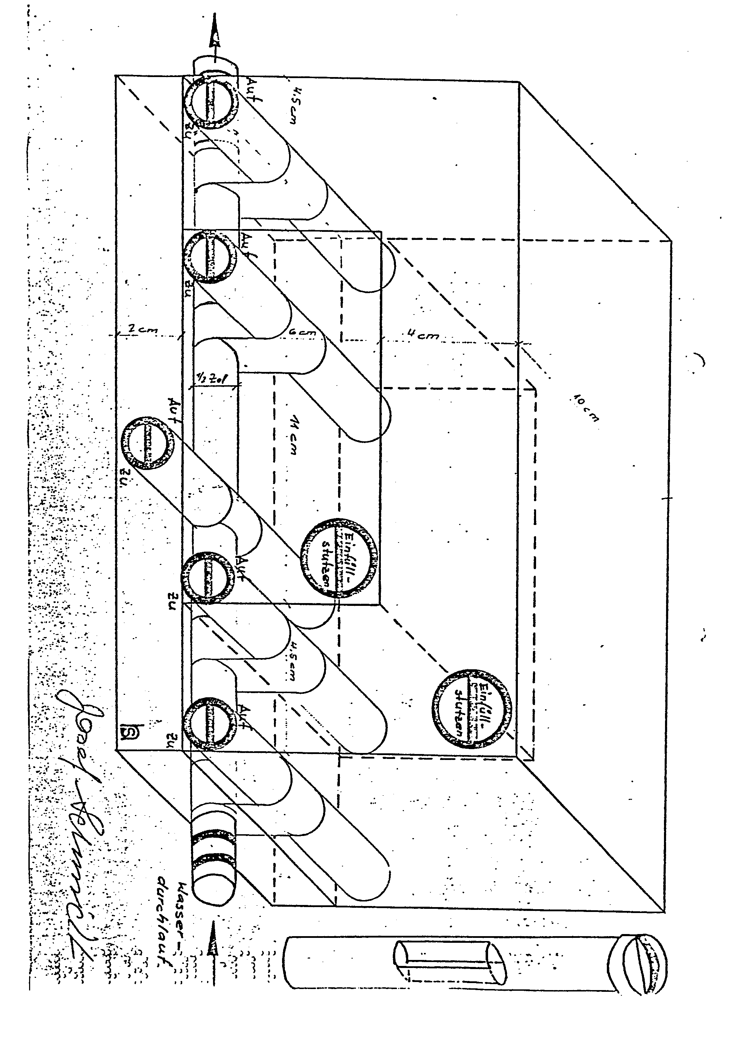

| Recherchenort | Abschlußdatum der Recherche | Prüfer |
|---|---|---|
| Berlin | 21-04-1982 | BECKER |

EPA form 1503.1 06.78